(19) Europäisches Patentamt
European Patent Office
Office européen des brevets

(11) **EP 2 955 472 B1**

(12) **FASCICULE DE BREVET EUROPEEN**

(45) Date de publication et mention
de la délivrance du brevet:
**11.12.2019 Bulletin 2019/50**

(51) Int Cl.:
*F41G 7/22* *(2006.01)* *G05D 1/10* *(2006.01)*
*G05D 1/12* *(2006.01)*

(21) Numéro de dépôt: **15290146.8**

(22) Date de dépôt: **03.06.2015**

(54) **PROCÉDÉ ET SYSTÈME POUR LE GUIDAGE, EN PHASE TERMINALE, D'UN MISSILE INTERCEPTEUR VERS UNE CIBLE AÉRIENNE MOBILE**

VERFAHREN UND SYSTEM ZUM LENKEN, IN DER ENDPHASE, EINES ABFANGFLUGKÖRPERS AUF EIN MOBILES LUFTZIEL HIN

METHOD AND SYSTEM FOR GUIDING, IN THE TERMINAL PHASE, AN INTERCEPTOR MISSILE TOWARDS A MOVING AERIAL TARGET

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.06.2014 FR 1401343**

(43) Date de publication de la demande:
**16.12.2015 Bulletin 2015/51**

(73) Titulaire: **MBDA France
92350 Le Plessis-Robinson (FR)**

(72) Inventeur: **Picciotto, François de
75015 Paris (FR)**

(74) Mandataire: **Gevers & Orès
Immeuble le Palatin 2
3 Cours du Triangle
CS 80165
92939 Paris La Défense Cedex (FR)**

(56) Documents cités:
**WO-A1-2013/111138        US-A- 6 006 145
US-A1- 2004 155 142        US-B1- 7 394 047**

**Description**

La présente invention concerne un procédé et un système pour le guidage, en phase terminale, d'un missile intercepteur vers une cible aérienne mobile.

On sait que la trajectoire d'un missile intercepteur vers une cible aérienne comporte successivement plusieurs phases, notamment une phase de lancement, une phase intermédiaire et une phase terminale. Bien que le guidage en phase de lancement et en phase intermédiaire soit important pour le succès de l'interception, le guidage en phase terminale est encore plus important, puisque c'est lui qui détermine la plus petite distance d'approche de ladite cible par le missile intercepteur et donc la probabilité de la destruction de la cible. Dans la technique de guidage des missiles intercepteurs cette plus petite distance d'approche est généralement appelée « distance de passage ».

En règle générale, dans la technique connue, le guidage d'un missile intercepteur en phase terminale est réalisé en « navigation proportionnelle », c'est-à-dire proportionnellement à la rotation apparente de la droite (ligne de visée) joignant le missile intercepteur à ladite cible. Un tel guidage présente l'inconvénient de faire l'hypothèse que l'accélération du missile intercepteur et l'accélération de la cible sont nulles. Par suite, si cette hypothèse n'est pas réalisée (ce qui est souvent le cas avec des cibles très manoeuvrantes), la distance de passage réellement obtenue ne peut être optimale.

Pour remédier à un tel inconvénient, cette technique connue peut comporter des variantes spécifiques permettant, par exemple, de :

- compenser un terme d'accélération constant dans l'évolution du missile intercepteur ou de la cible,
- compenser une manoeuvre hélicoïdale de la cible, ou
- compenser la constante de temps de pilotage du missile intercepteur.

De telles variantes spécifiques présentent elles-mêmes l'inconvénient d'être analytiques et de devoir être précalculées et enregistrées au préalable dans le système de guidage du missile intercepteur.

De plus, chacune de ces variantes spécifiques n'a d'efficacité que pour la situation particulière précise pour laquelle elle a été développée et ne peut être combinée directement avec une autre pour optimiser la distance de passage entre un missile intercepteur et une cible se trouvant dans une situation résultant de la combinaison des situations particulières respectives.

Ainsi, l'évolution dynamique réelle entre le missile intercepteur et la cible est généralement telle qu'elle ne peut correspondre à aucune de ces variantes ou à des combinaisons de celles-ci.

Par ailleurs, l'article « Decision Directed Adaptive Estimation and Guidance for an Interception Endgame» de Dany Dionne, Hannah Michaïska, Joseph Shinar et Yaakov Oshman paru dans le « Journal of Guidance, Control and Dynamics » Vol. 29, No 4, Juillet-Août 2006, décrit un système de guidage en phase terminale dans lequel le missile intercepteur comprend un ensemble d'estimateurs d'état (du type filtres de Kalman), un ensemble de lois de guidage analytiques préenregistrées dans ledit missile intercepteur et un organe de décision pour déterminer celle des lois de guidage prédéterminées à mettre en œuvre en fonction des mesures desdits dispositifs estimateurs d'état.

Ainsi, dans ce système de guidage connu, on retrouve les inconvénients mentionnés ci-dessus à propos des variantes spécifiques du guidage en navigation proportionnelle.

De plus, ce système de guidage connu fait également l'hypothèse qu'aucune force extérieure n'est appliquée au missile intercepteur, ni à la cible jusqu'à l'interception.

De façon semblable, le document US 2004/155142A1 met en œuvre une loi de guidage préenregistrée dont l'expression analytique est donnée par une pluralité d'équations.

De même, les documents US 7,394,047 B1, US 6,006,145 et WO 2013/111138 décrivent des procédés qui mettent en œuvre des lois de guidage analytiques préenregistrées.

Quant à lui, l'article « Using a multiple-model adaptive estimator in a random evasion missile/aircraft encounter » de Yaakov Oshman, Joseph Shinar et S. Avrashi Weizman paru dans le « Journal of Guidance, Control and Dynamics » vol. 24, No.6, November-December 2001, décrit une loi de guidage de type DGL impliquant une absence d'accélération du missile intercepteur et une absence de manœuvre de la cible.

La présente invention a pour objet de remédier aux inconvénients de la technique antérieure rappelée ci-dessus en permettant de prendre en compte une évolution dynamique relative, réelle et complexe, entre le missile intercepteur et la cible (pour déterminer en ligne la commande optimale à réaliser), afin de minimiser ladite distance de passage.

A cette fin, selon l'invention, on met en oeuvre le procédé selon la revendication 1 pour le guidage, en phase terminale, d'un missile intercepteur vers une cible aérienne, ledit missile intercepteur comportant :

- des instruments de bord configurés pour délivrer des informations sur la dynamique actuelle dudit missile intercepteur ;
- des organes de pilotage dudit missile intercepteur ;
- un senseur de guidage terminal configuré pour délivrer séquentiellement les mesures écartométriques de ladite cible ;
- un système de reconstruction configuré pour reconstruire, à partir desdites mesures écartométriques et dans un repère de référence fixe, au moins les mesures d'un angle de site et d'un angle de gisement définissant la direction de ladite cible par rapport audit missile intercepteur ; et

- une pluralité d'estimateurs d'état Ei (avec i = 1, 2,...,n) dont chacun d'eux est configuré pour fonctionner avec une fonction de propagation gi correspondant à une hypothèse particulière de la dynamique de ladite cible, pour recevoir lesdites mesures écartométriques et pour délivrer séquentiellement une estimée $X_i$ de l'état de ladite cible en conformité avec la relation $\dot{X}_i = g_i(X_i)$, dans laquelle $\dot{X}_i$ est la dérivée $dX_i/dt$ de ladite estimée $X_i$ par rapport au temps t,

procédé selon lequel :

- pour chaque estimateur d'état Ei et à chaque pas k du fonctionnement séquentiel de celui-ci, on calcule un indice de pertinence qui est la probabilité $p_{ik}$ de la différence entre les mesures reconstruites d'angle de site et d'angle de gisement reçues dudit système de reconstruction et les angles correspondants de l'estimée $X_i$ prédite ;
- pour chaque estimateur d'état Ei, on calcule le produit cumulé $Pi = \pi_k p_{ik}$ des probabilités $p_{ik}$ depuis l'instant initial jusqu'à l'instant courant ;
- en prenant en compte la pluralité des différents produits cumulés de probabilité $P_i$, on détermine au moins une estimée finale $X_F$ de l'état de ladite cible à partir desdites estimées Xi, ainsi que la plus petite distance d'approche de la cible par ledit missile intercepteur, le temps restant jusqu'à cette plus petite distance d'approche et le vecteur entre le missile intercepteur et la cible à l'instant de ladite plus petite distance d'approche ;
- on élabore en conséquence une commande de guidage pour ledit missile intercepteur, prenant en compte le vecteur ; et
- on applique ladite commande de guidage auxdits organes de pilotage du missile intercepteur,

est remarquable en ce que, pour déterminer la plus petite distance d'approche de la cible par le missile intercepteur, le temps tgo restant jusqu'à cette plus petite distance d'approche et le vecteur $\overrightarrow{EBF}$ entre le missile intercepteur et la cible à l'instant de ladite plus petite distance d'approche, on intègre numériquement ladite estimée finale $X_F$ et les informations sur la dynamique dudit missile intercepteur en utilisant la ou les même(s) fonction(s) de propagation $g_F$ que celle(s) mise(s) en œuvre par le ou les estimateur(s) d'état Ei correspondant auxdites estimées Xi à partir desquelles est formée ladite estimée finale $X_F$.

Ainsi, grâce à la présente invention, on utilise des modèles probables de propagation de la dynamique de la cible pour prédire numériquement le futur de la dynamique complète missile intercepteur-cible jusqu'à l'interception. Le procédé conforme à la présente invention permet d'une part, une estimation plurielle, et non pas hypothèse par hypothèse, de la dynamique missile intercepteur - cible et, d'autre part, l'exploitation de cette estimation plurielle pour prédire le futur de cette dynamique.

En effet, selon la présente invention, on utilise les mesures délivrées par le senseur de guidage terminal pour en déduire, par estimation bayésienne, un jeu de composantes (phénomènes) de la dynamique missile intercepteur - cible et on intègre numériquement en ligne, par la mise en œuvre d'une méthode d'intégration numérique comme par exemple celle de Runge-Kutta, le futur de cette dynamique, depuis l'instant courant présent jusqu'à l'instant de plus proche passage en tenant compte de tous les phénomènes identifiés, ce qui permet de prédire, à la fois, le vecteur $\overrightarrow{EBF}$ de la distance de passage prévue à effort missile nul et le carré du temps restant avant ce dernier instant.

Le procédé de l'invention consiste donc à développer, à bord du missile intercepteur, une simulation numérique intégrant numériquement le futur de la dynamique missile intercepteur - cible et couplée à un système d'estimation bayésienne nourrissant cette simulation, puis à utiliser cette simulation pour déterminer une commande de guidage optimale pour le missile intercepteur.

La commande de guidage du missile intercepteur peut être de la forme

$$\overrightarrow{\Gamma(t)} = \frac{N(tgo)}{tgo^2} \overrightarrow{EBF}$$

dans laquelle $\overrightarrow{\Gamma(t)}$ est l'accélération à communiquer au missile intercepteur en fonction du temps t et N(tgo) est un terme de gain éventuellement variable en fonction de tgo.

Ladite estimée finale $X_F$ peut être simplement constituée par l'estimée $X_i$ dont le produit cumulé de probabilité $P_i$ est le plus élevé.

En variante, cette estimée finale $X_F$ peut être une combinaison d'au moins deux estimées $X_i$, en tenant compte des produits cumulés de probabilité $P_i$ respectifs.

La présente invention concerne de plus un système pour le guidage, en phase terminale, d'un missile intercepteur vers une cible aérienne mobile, ce système mettant en œuvre le procédé écrit ci-dessus.

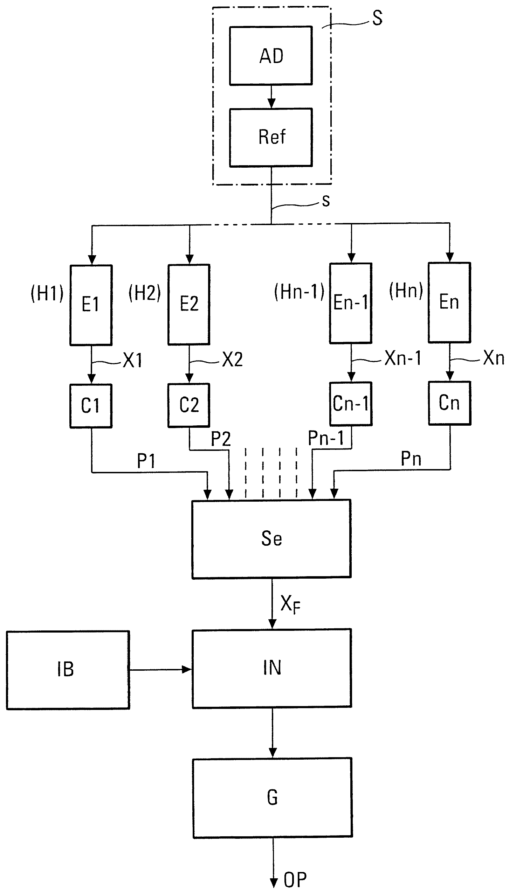

La figure unique du dessin annexé fera bien comprendre comment l'invention peut être réalisée. Cette figure unique montre le diagramme du système selon l'invention.

Le schéma synoptique montré par cette figure unique illustre un système de guidage, en phase terminale, d'un missile intercepteur (non représenté), monté à bord de ce dernier et mettant en oeuvre le procédé conforme à la présente invention.

De façon connue, ce système de guidage comporte :

- un senseur de guidage terminal S, comportant un autodirecteur AD (de type IR, RF, visible,...) et un système de changement de repère de référence Ref.

L'autodirecteur AD délivre séquentiellement les mesures écartométriques de la cible (non représentée) qu'il observe, ces mesures écartométriques comportant au moins deux angles indiquant la direction dans l'espace de la cible par rapport à l'axe de visée de l'autodirecteur AD. Quant à lui, le système Ref a pour objet de reconstruire les mesures écartométriques délivrées par l'autodirecteur AD, dans un repère de référence fixe, par exemple le repère géographique local. Ainsi, les mesures écartométriques apparaissant à la sortie s du senseur de guidage terminal S, comportent au moins un angle de site et un angle de gisement définissant la direction, par rapport au missile intercepteur, de la cible dans ledit repère de référence fixe ; et

• une pluralité d'estimateurs d'état E1, E2,...En-1, En par exemple des filtres de Kalman étendus, unscented,..., des filtres à filtrage particulaire, etc...Chaque estimateur d'état Ei (avec i = 1, 2,...,n) correspond à une hypothèse particulière H1, H2,...Hn de la dynamique de la cible et reçoit les mesures écartométriques du senseur de guidage terminal S. Le modèle de mesure, c'est-à-dire ladite hypothèse particulière, associé à chaque estimateur d'état Ei est la transformation liant les variables d'état de la cible aux mesures écartométriques délivrées par le senseur de guidage terminal S. Chaque estimateur d'état Ei fonctionne respectivement avec une fonction de propagation g1, g2,...gn correspondant à l'hypothèse de dynamique de cible associée et délivre séquentiellement une estimée X1, X2,...Xn (ci-après Xi) de l'état de ladite cible en conformité avec la relation $\dot{X}_i$ = gi (Xi).

A titre d'exemples d'hypothèses Hi de dynamique de la cible, représentées par les estimateurs d'état Ei, on peut citer :

• un mouvement balistique lisse, sans perturbation, résultant uniquement de la traînée et de la gravité ;
• un mouvement balistique hélicoïdal d'oscillation d'incidence, correspondant au repointage progressif de l'axe de la cible entraînant un mouvement circulaire de fréquence croissante et de rayon décroissant ;

• un mouvement balistique doublement hélicoïdal d'oscillation d'incidence correspondant au repointage progressif de l'axe de la cible en présence d'un roulis non nul de celle-ci ;

• ...

Aux estimateurs d'état Ei, sont respectivement associés des moyens de calcul C1, C2,...Cn qui reçoivent de ceux-ci l'estimée Xi correspondante, chacun desdits moyens de calcul calculant pour chaque estimateur d'état et à chaque pas k de la mesure écartométrique délivrée par le senseur de guidage terminal S :

- d'une part, un indice de pertinence, correspondant à la probabilité $p_{ik}$ de l'innovation constituée par la différence entre les mesures, dans le repère fixe, des angles de site et de gisement de la cible par rapport au missile intercepteur et les angles correspondants de l'estimée Xi prédite. A toutes fins utiles, il est rappelé ici que, dans le cadre de la théorie de Kalman, si $v_k$ est l'innovation, $S^y_{k|k-1}$ la racine supérieure de Cholesky de sa covariance prédite et $L_y$ la dimension de la mesure, la probabilité de l'innovation lors de la mesure k s'écrit

$$\text{pinnov}(v_k) = \frac{\exp\left(-\left\|v_k^T / S^y_{k|k-1}\right\|_2^2 / 2\right)}{(2\pi)^{L_y/2}\left|\prod_1^{L_y} S^y_{k|k-1}(i,i)\right|}$$

Bien entendu, plus cette probabilité est grande, plus la mesure reçue est conforme au modèle courant ;

- d'autre part, le produit cumulé $P_i = \pi_k\, p_{ik}$ des probabilités $p_{ik}$ depuis l'instant initial jusqu'à l'instant actuel courant.

Ainsi, la comparaison des différents produits cumulés de probabilité $P_i$ permet de déterminer la pertinence de chaque estimée $X_i$ des hypothèses $H_i$ et d'ordonner les hypothèses $H_i$ suivant la valeur du produit cumulé $P_i$ qui leur correspond.

A cet effet, les différents produits cumulés de probabilité $P_i$ sont adressés à un module de sélection $S_e$ qui ordonne lesdites hypothèses $H_i$ et qui, à partir desdites estimées $X_i$, forme au moins une estimée finale $X_F$ qu'il transmet à un module d'intégration numérique IN, dont l'algorithme est, par exemple, du type Runge-Kutta.

Cette estimée finale $X_F$ peut être simplement l'estimée $X_i$ de produit cumulé de probabilité Pi le plus fort pour ne tenir compte que de l'hypothèse Hi correspondante la plus probable.

En revanche, l'estimée finale $X_F$ peut être constituée par une combinaison, par exemple la moyenne, de plusieurs estimées $X_i$, dont certaines d'elles sont éventuellement pondérées, en tenant compte des produits cumulés de probabilité $P_i$ respectifs.

De plus, en variante, le module de sélection $S_e$ peut transmettre au module d'intégration IN plusieurs estimées $X_i$ traitées individuellement par ce dernier module IN.

Le module d'intégration numérique IN est donc apte à propager la dynamique de la cible représentée par au moins une estimée finale $X_F$, de préférence en utilisant la ou les mêmes fonctions de propagation $g_F$ que celle(s) mise(s) en oeuvre par le ou les estimateurs d'état $E_i$ correspondants.

Le module d'intégration IN reçoit, de plus, des instruments de bord IB dudit missile intercepteur, les informations sur la dynamique actuelle de ce dernier.

Ainsi, la dynamique du missile intercepteur est représentée par un vecteur d'état comportant au moins six composantes, à savoir trois de position et trois de vitesse, initialisées à leur valeur couramment connue. Eventuellement, en considérant par exemple un retour à un effort de pilotage nul, d'autres composantes, telles que celles de la constante de temps de pilotage du missile intercepteur, peuvent être intégrées audit vecteur d'état.

L'intégration numérique effectuée par le module IN permet donc de prédire la dynamique et la situation futures relatives entre le missile intercepteur et la cible. A chaque pas de temps de l'intégration numérique, le module IN calcule la position relative et la vitesse de rapprochement entre le missile intercepteur et la cible. Le module IN peut donc prédire la « distance de passage » et le temps restant tgo jusqu'à cette plus petite distance d'approche. De plus, il fournit le vecteur $\overrightarrow{EBF}$ entre le missile intercepteur et la cible à l'instant précis de la plus petite distance d'approche.

Ces informations sont transmises à un module de commande de guidage G qui, par exemple, calcule une commande de la forme

$$\overrightarrow{\Gamma(t)} = \frac{N(tgo)}{tgo^2} \overrightarrow{EBF}$$

dans laquelle $\overrightarrow{\Gamma(t)}$ est l'accélération à communiquer en fonction du temps t au missile intercepteur et N(tgo) est un terme de gain éventuellement variable en fonction de tgo et généralement compris entre 3 et 4.

Dans le cas évoqué ci-dessus où plusieurs estimées $X_i$ ont été transmises - à titre de $X_F$ - au module d'intégration IN par le module de sélection $S_e$, la commande en accélération est alors une combinaison ou agrégation des différentes accélérations résultant respectivement desdites estimées $X_i$, tenant compte des produits cumulés de probabilité $P_i$ respectifs.

La commande de guidage élaborée par le module G est appliquée par celui-ci aux organes de pilotage OP (gouvernes, tuyères...) du missile intercepteur.

**Revendications**

1. Procédé pour le guidage, en phase terminale, d'un missile intercepteur vers une cible aérienne, ledit missile intercepteur comportant :

   • des instruments de bord (IB) configurés pour délivrer des informations sur la dynamique actuelle dudit missile intercepteur ;
   • des organes de pilotage (OP) dudit missile intercepteur ;
   • un senseur de guidage terminal (AD) configuré pour délivrer séquentiellement des mesures écartométriques de ladite cible ;

   • un système de reconstruction (Ref) configuré pour reconstruire, à partir desdites mesures écartométriques et dans un repère de référence fixe, au moins les mesures d'un angle de site et d'un angle de gisement définissant la direction de ladite cible par rapport audit missile intercepteur ; et
   • une pluralité d'estimateurs d'état Ei dont chacun d'eux est configuré pour fonctionner avec une fonction de propagation gi correspondant à une hypothèse particulière de la dynamique de ladite cible, pour recevoir lesdites mesures écartométriques et pour délivrer séquentiellement une estimée Xi de l'état de ladite cible en conformité avec la relation

   $$\dot{X}_i = dXi/dt = g_i(Xi)$$

   procédé selon lequel :

   • pour chaque estimateur d'état Ei et à chaque pas k du fonctionnement séquentiel de celui-ci, on calcule un indice de pertinence qui est la probabilité $p_{ik}$ de la différence entre les mesures reconstruites d'angle de site et d'angle de gisement reçues dudit système de reconstruction et les angles correspondants de l'estimée $X_i$ prédite ;
   • pour chaque estimateur d'état Ei, on calcule le produit cumulé $P_i = \pi_k p_{ik}$ des probabilités $p_{ik}$ depuis l'instant initial jusqu'à l'instant courant ;
   • en prenant en compte la pluralité des différents produits cumulés de probabilité $P_i$, on détermine au moins une estimée finale $X_F$ de l'état de ladite cible à partir desdites estimées Xi, ainsi que la plus petite distance d'approche de la cible par ledit missile intercepteur, le temps restant jusqu'à cette plus petite distance d'approche et le vecteur entre le missile intercepteur et la cible à l'instant de ladite plus petite distance d'approche ;
   • on élabore en conséquence une commande de guidage pour ledit missile intercepteur, prenant en compte le vecteur ; et
   • on applique ladite commande de guidage auxdits organes de pilotage du missile intercepteur,

   **caractérisé en ce que**, pour déterminer la plus petite distance d'approche de la cible par le missile intercepteur, le temps tgo restant jusqu'à cette plus petite distance d'approche et le vecteur $\overrightarrow{EBF}$ entre le missile intercepteur et la cible à l'instant de ladite plus petite distance d'approche, on intègre numériquement ladite estimée finale $X_F$ et les informations sur la dynamique dudit missile intercepteur en utilisant la ou les même(s) fonction(s) de propagation $g_F$ que celle(s) mise(s) en œuvre par le ou les estimateur(s) d'état Ei correspondant auxdites estimées Xi à partir desquelles est formée ladite estimée finale $X_F$.

2. Procédé selon la revendication 1, **caractérisé en ce que** ladite commande de guidage du missile intercepteur est de la forme

$$\overrightarrow{\Gamma(t)} = \frac{N(tgo)}{tgo^2} \overrightarrow{EBF}$$

dans laquelle $\overrightarrow{\Gamma(t)}$ est l'accélération à communiquer au missile intercepteur en fonction du temps t et $N(t_{go})$ est un terme de gain éventuellement variable en fonction de tgo.

3. Procédé selon l'une des revendications 1 ou 2, **caractérisé en ce que** l'estimée finale $X_F$ est constituée par l'estimée $X_i$ dont le produit cumulé de probabilité $P_i$ est le plus élevé.

4. Procédé selon l'une des revendications 1 ou 2, **caractérisé en ce que** l'estimée finale $X_F$ est une combinaison d'au moins deux estimées $X_i$, tenant compte des produits cumulés de probabilité $P_i$ respectifs.

5. Procédé selon l'une des revendications 1 à 4, **caractérisé en ce que** l'intégration numérique de l'estimée finale $X_F$ et des informations sur la dynamique actuelle du missile intercepteur est réalisée selon la méthode de Runge-Kutta.

6. Système pour le guidage, en phase terminale, d'un missile intercepteur vers une cible aérienne, ledit missile intercepteur comportant :

    • des instruments de bord (1B) configurés pour délivrer des informations sur la dynamique actuelle dudit missile intercepteur ;
    • des organes de pilotage (OP) dudit missile intercepteur ;
    • un senseur de guidage terminal (AD) configuré pour délivrer séquentiellement des mesures écartométriques de ladite cible ;
    • un système de reconstruction (Ref) configuré pour reconstruire, à partir desdites mesures écartométriques et dans un repère de référence fixe, au moins les mesures d'un angle de site et d'un angle de gisement définissant la direction de ladite cible par rapport audit missile intercepteur ;
    • une pluralité d'estimateurs d'état Ei dont chacun d'eux est configuré pour fonctionner avec une fonction de propagation gi correspondant à une hypothèse particulière de la dynamique de ladite cible, pour recevoir lesdites mesures écartométriques et pour délivrer séquentiellement une estimée Xi de l'état de ladite cible en conformité avec la relation

$$\dot{X_i} = dXi/dt = g_i(Xi) \ ;$$

    • des moyens de calcul (C1 à Cn) configurés pour, pour chaque estimateur d'état Ei et à chaque pas k du fonctionnement séquentiel de celui-ci, calculer un indice de pertinence qui est la probabilité $p_{ik}$ de la différence entre les mesures reconstruites d'angle de site et d'angle de gisement reçues dudit système de reconstruction (Ref) et les angles correspondants de l'estimée $X_i$ prédite et, pour chaque estimateur d'état Ei, calculer le produit cumulé $P_i = \pi_k p_{ik}$ des probabilités $p_{ik}$ depuis l'instant initial jusqu'à l'instant courant ;
    • des moyens de sélection ($S_e$) configurés pour prendre en compte la pluralité des différents produits cumulés de probabilité $P_i$, pour établir au moins une estimée finale $X_F$ de l'état de ladite cible à partir desdites estimées Xi ;
    • des moyens configurés pour déterminer la plus petite distance d'approche de la cible par le missile intercepteur, le temps restant jusqu'à cette plus petite distance d'approche et le vecteur entre le missile intercepteur et la cible à l'instant de la plus petite distance d'approche ; et
    • des moyens (G) configurés pour élaborer une commande de guidage pour ledit missile intercepteur, **caractérisé en ce que** lesdits moyens pour déterminer la plus petite distance d'approche de la cible par le missile intercepteur, le temps tgo restant jusqu'à cette plus petite distance d'approche et le vecteur $\overrightarrow{EBF}$ entre le missile intercepteur et la cible à l'instant de ladite plus petite distance d'approche sont constitués par des moyens d'intégration numérique (IN) configurés pour intégrer numériquement ladite estimée finale $X_F$ et les informations sur la dynamique dudit missile intercepteur en utilisant la ou les même(s) fonction(s) de propagation $g_F$ que celle(s) mise(s) en œuvre par le ou les estimateur(s) d'état Ei correspondant auxdites estimées Xi à partir desquelles est formée ladite estimée finale $X_F$.

7. Système de guidage selon la revendication 6, **caractérisé en ce que** ladite commande de guidage est de la forme

$$\overrightarrow{\Gamma(t)} = \frac{N(tgo)}{tgo^2} \overrightarrow{EBF}$$

dans laquelle $\overrightarrow{\Gamma(t)}$ est l'accélération à communiquer au missile intercepteur en fonction du temps t et N(tgo) est un terme de gain éventuellement variable en fonction de tgo.

8. Missile intercepteur,
**caractérisé en ce qu'**il comporte un système de guidage spécifié sous l'une des revendications 6 ou 7.

**Patentansprüche**

1. Verfahren zur Lenkung, während der Endphase, eines Abfangflugkörpers in Richtung eines Luftziels, wobei der Abfangflugkörper umfasst:

   • Bordinstrumente (IB), konfiguriert zum Liefern von Informationen über die aktuelle Dynamik des Abfangflugkörpers;
   • Steuerungselemente (OP) des Abfangflugkörpers;
   • einen Sensor zur Endphasenlenkung (AD), konfiguriert zum aufeinanderfolgenden Liefern von Abstandsmessungen des Ziels;
   • ein Rekonstruktionssystem (Ref), konfiguriert zum Rekonstruieren, ausgehend von den Abstandsmessungen und in einem festen Referenzmarkierungssystem, von mindestens den Messungen eines Höhenwinkels und eines Seitenwinkels, die die Richtung des Ziels bezogen auf den Abfangflugkörper definieren; und
   • eine Vielzahl von Zustandsabschätzern Ei, wobei jeder von diesen zum Betrieb mit einer Ausbreitungsfunktion gi, entsprechend einer bestimmten Hypothese der Dynamik des Ziels, zum Empfangen der Abstandsmessungen und zum aufeinanderfolgenden Liefern eines Abschätzwerts Xi des Zustands des Ziels in Übereinstimmung mit der Beziehung $\dot{X}i = dXi/dt = gi(Xi)$ konfiguriert ist

   Verfahren, wobei:

   • für jeden Zustandsabschätzer Ei und bei jedem Schritt k der nachfolgenden Tätigkeit dessen ein Relevanzindex berechnet wird, der die Wahrscheinlichkeit $p_{ik}$ des Unterschieds zwischen den rekonstruierten Messungen eines Höhenwinkels und eines Seitenwinkels, die von dem Rekonstruktionssystem empfangen wurden, und dem vorhergesagten Abschätzwert $X_i$ der entsprechenden Winkel ist;
   • für jeden Zustandsabschätzer Ei das kumulierte Produkt berechnet wird $P_i = \pi_k p_{ik}$ der Wahrscheinlichkeiten $p_{ik}$ ab dem anfänglichen Zeitpunkt bis zum momentanen Zeitpunkt;
   • indem die Vielzahl der verschiedenen kumulierten Wahrscheinlichkeitsprodukte $P_i$ berücksichtigt wird, mindestens ein finaler Abschätzwert $X_F$ des Zustands des Ziels ausgehend von den Abschätzwerten Xi, sowie der kleinste Annäherungsabstand des Ziels durch den Abfangflugkörper, die verbleibende Zeit bis zu diesem kleinsten Annäherungsabstand und der Vektor zwischen dem Abfangflugkörper und dem Ziel zum Zeitpunkt des kleinsten Annäherungsabstands bestimmt werden;
   • infolgedessen ein Lenkungsbefehl für den Abfangflugkörper unter Berücksichtigung des Vektors ausgearbeitet wird; und
   • der Lenkungsbefehl auf die Steuerungselemente des Abfangflugkörpers angewendet wird,

   **dadurch gekennzeichnet, dass** zum Bestimmen des kleinsten Annäherungsabstands des Ziels durch den Abfangflugkörper, der Zeit tgo, die bis zu diesem kleinsten Annäherungsabstand bleibt, und des Vektors $\overrightarrow{EBF}$ zwischen dem Abfangflugkörper und dem Ziel zum Zeitpunkt des kleinsten Annäherungsabstands, der finale Abschätzwert $X_F$ und die Informationen zu der Dynamik des Abfangflugkörpers unter Verwendung der gleichen Ausbreitungsfunktion(en) $g_F$ wie jener, die durch den oder die Zustandsabschätzer Ei eingesetzt wurde(n), entsprechend den Abschätzwerten Xi, von denen ausgehend der finale Abschätzwert $X_F$ gebildet wurde, numerisch integriert werden.

2. Verfahren nach Anspruch 1,
**dadurch gekennzeichnet, dass** der Lenkungsbefehl des Abfangflugkörpers vorliegt in der Form

$$\overrightarrow{\Gamma(t)} = \frac{N(tgo)}{tgo^2} \overrightarrow{EBF} ,$$

wobei $\overrightarrow{\Gamma(T)}$ die dem Abfangflugkörper zu kommunizierende Beschleunigung in Abhängigkeit von der Zeit t ist und $N(t_{go})$ ein gegebenenfalls in Abhängigkeit von tgo variabler Verstärkungsausdruck ist.

3. Verfahren nach einem der Ansprüche 1 oder 2,
**dadurch gekennzeichnet, dass** der finale Abschätzwert $X_F$ aus dem Abschätzwert $X_i$ zusammengesetzt ist, von dem das kumulierte Wahrscheinlichkeitsprodukt $P_i$ das höchste ist.

4. Verfahren nach einem der Ansprüche 1 oder 2,
**dadurch gekennzeichnet, dass** der finale Abschätzwert $X_F$ unter Beachtung der jeweiligen kumulierten Wahrscheinlichkeitsprodukte $P_i$ eine Kom-

bination von mindestens zwei Abschätzwerten $X_i$ ist.

5. Verfahren nach einem der Ansprüche 1 bis 4, **dadurch gekennzeichnet, dass** die numerische Integration des finalen Abschätzwerts $X_F$ und der Informationen zur aktuellen Dynamik des Abfangflugkörpers gemäß dem Runge-Kutta-Verfahren durchgeführt wird.

6. System zur Lenkung, während der Endphase, eines Abfangflugkörpers in Richtung eines Luftziels, wobei der Abfangflugkörper umfasst:

   • Bordinstrumente (1B), konfiguriert zum Liefern von Informationen über die aktuelle Dynamik des Abfangflugkörpers;
   • Steuerungselemente (OP) des Abfangflugkörpers;
   • einen Sensor zur Endphasenlenkung (AD), konfiguriert zum aufeinanderfolgenden Liefern der Abstandsmessungen des Ziels;
   • ein Rekonstruktionssystem (Ref), konfiguriert zum Rekonstruieren, ausgehend von den Abstandsmessungen und in einem festen Referenzmarkierungssystem, von mindestens den Messungen eines Höhenwinkels und eines Seitenwinkels, die die Richtung des Ziels bezogen auf den Abfangflugkörper definieren;
   • eine Vielzahl von Zustandsabschätzern Ei, wobei jeder von diesen zum Betrieb mit einer Ausbreitungsfunktion gi, entsprechend einer bestimmten Hypothese der Dynamik des Ziels, zum Empfangen der Abstandsmessungen und zum aufeinanderfolgenden Liefern eines Abschätzwerts Xi des Zustands des Ziels konfiguriert ist in Übereinstimmung mit der Beziehung $\dot{X}_i = dX_i/dt = g_i(X_i)$;
   • Berechnungsmittel (C1 bis Cn), konfiguriert zum Berechnen, für jeden Zustandsabschätzer Ei und bei jedem Schritt k der aufeinanderfolgenden Tätigkeit dessen, eines Relevanzindexes, der die Wahrscheinlichkeit $p_{ik}$ des Unterschieds zwischen den rekonstruierten Messungen eines Höhenwinkels und eines Seitenwinkels, die von dem Rekonstruktionssystem (Ref) empfangen wurden, und der dem vorhergesagten Abschätzwert $X_i$ entsprechenden Winkeln ist, und, für jeden Zustandsabschätzer Ei, Berechnen des kumulierten Produkts $P_i = \pi_k P_{ik}$ der Wahrscheinlichkeiten $p_{ik}$ ab dem anfänglichen Zeitpunkt bis zum momentanen Zeitpunkt;
   • Auswahlmittel ($S_\theta$), konfiguriert zum Berücksichtigen der Vielzahl von verschiedenen kumulierten Wahrscheinlichkeitsprodukten $P_i$ zum Etablieren mindestens eines finalen Abschätzwerts $X_F$ des Zustands des Ziels ausgehend von den Abschätzwerten Xi;
   • Mittel, konfiguriert zum Bestimmen des kleinsten Annäherungsabstands des Ziels durch den Abfangflugkörper, der Zeit, die bis zu diesem kleinsten Annäherungsabstand bleibt und des Vektors zwischen dem Abfangflugkörper und dem Ziel zum Zeitpunkt des kleinsten Annäherungsabstands; und
   • Mittel (G), konfiguriert zum Ausarbeiten eines Lenkungsbefehls für den Abfangflugkörper,

**dadurch gekennzeichnet, dass** die Mittel zum Bestimmen des kleinsten Annäherungsabstands des Ziels durch den Abfangflugkörper, der Zeit tgo, die bis zu dem kleinsten Annäherungsabstand bleibt, und des Vektors $\overrightarrow{EBF}$ zwischen dem Abfangflugkörper und dem Ziel zum Zeitpunkt des kleinsten Annäherungsabstands aus numerischen Integrationsmitteln (IN) zusammengesetzt sind, konfiguriert, um den finalen Abschätzwerts $X_F$ und die Informationen zu der Dynamik des Abfangflugkörpers unter Verwendung der gleichen Ausbreitungsfunktion(en) $g_F$ wie jener, die durch den oder die Zustandsabschätzer Ei eingesetzt wurde(n), entsprechend den Abschätzwerten Xi, von denen ausgehend der finale Abschätzwert $X_F$ gebildet wurde, numerisch zu integrieren.

7. Lenkungssystem nach Anspruch 6, **dadurch gekennzeichnet, dass** der Lenkungsbefehl vorliegt in der Form

$$\overrightarrow{\Gamma(t)} = \frac{N(tgo)}{tgo^2} \overrightarrow{EBF}$$,

wobei $\overrightarrow{\Gamma(T)}$ die dem Abfangflugkörper zu kommunizierende Beschleunigung in Abhängigkeit von der Zeit t ist und N(tgo) ein gegebenenfalls in Abhängigkeit von tgo variabler Verstärkungsausdruck ist.

8. Abfangflugkörper, **dadurch gekennzeichnet, dass** er ein unter einem der Ansprüche 6 oder 7 spezifiziertes Lenkungssystem umfasst.

**Claims**

1. Method for the terminal-phase guidance of an interceptor missile towards an aerial target, said interceptor missile comprising:

   • onboard instruments (IB) configured for supplying information on the current dynamics of said interceptor missile;
   • parts (OP) for steering said interceptor missile;
   • a terminal-guidance sensor (AD) configured for supplying the deviation measurements of said target in a sequential manner;

• a reconstruction system (Ref) configured for reconstructing, from said deviation measurements and in a fixed frame of reference, at least the angle of elevation and bearing angle measurements that define the direction of said target in relation to said interceptor missile; and

• a plurality of status estimators Ei, each of which is configured for operating using a propagation function gi that corresponds to a particular hypothesis on the dynamics of said target, for receiving said deviation measurements, and for supplying, in a sequential manner, an estimate $X_i$ of the status of said target in accordance with the relationship

$$\dot{X}i = dXi/dt = g_i(Xi)$$

in which method:

• for each status estimator Ei and in each step k of the sequential operation thereof, a relevance index is calculated, which is the probability $p_{ik}$ of the difference between the reconstructed angle of elevation and bearing angle measurements received from said reconstruction system and the corresponding angles of the predicted estimate Xi;

• for each status estimator Ei, the cumulative product $P_i = \pi_k p_{ik}$ of the probabilities $p_{ik}$ is calculated from the first moment to the current time;

• by taking account of the plurality of different cumulative probability products $P_i$, at least one final estimate $X_F$ of the status of said target is determined from said estimates $X_i$, as are the shortest distance for said interceptor missile to approach the target, the time remaining until this shortest approach distance, and the vector between the interceptor missile and the target at the time of said shortest approach distance;

• a guidance command for said interceptor missile is created as a result, taking the vector into account; and

• said guidance command is applied to said parts for steering the interceptor missile, **characterised in that**, in order to determine the shortest distance for the interceptor missile to approach the target, the time tgo remaining until this shortest approach distance and the vector $\overrightarrow{EBF}$ between the interceptor missile and the target at the time of said shortest approach distance, said final estimate $X_F$ is numerically integrated with the information on the dynamics of said interceptor missile by using the same propagation function(s) $g_F$ as that/those used by the status estimator(s) Ei corresponding to said estimates Xi from which said final estimate $X_F$ is formed.

2. Method according to claim 1, **characterised in that** said command for guiding the interceptor missile is in the following form:

$$\overrightarrow{\Gamma(t)} = \frac{N(tgo)}{tgo^2} \overrightarrow{EBF}$$

in which $\overrightarrow{\Gamma(t)}$ is the acceleration to be communicated to the interceptor missile as a function of time t and $N(t_{go})$ is a gain limit that may vary as a function of tgo.

3. Method according to either claim 1 or claim 2, **characterised in that** said final estimate $X_F$ is formed by the estimate $X_i$ having the highest cumulative probability product $P_i$.

4. Method according to either claim 1 or claim 2, **characterised in that** the final estimate $X_F$ is a combination of at least two estimates $X_i$, taking into account the respective cumulative probability products $P_i$.

5. Method according to any of claims 1 to 4, **characterised in that** the final estimate $X_F$ is numerically integrated with the information on the current dynamics of the interceptor missile according to the Runge-Kutta method.

6. System for the terminal-phase guidance of an interceptor missile towards an aerial target, said interceptor missile comprising:

• onboard instruments (1B) configured for supplying information on the current dynamics of said interceptor missile;

• parts (OP) for steering said interceptor missile;

• a terminal-guidance sensor (AD) configured for supplying the deviation measurements of said target in a sequential manner;

• a reconstruction system (Ref) configured for reconstructing, from said deviation measurements and in a fixed frame of reference, at least the angle of elevation and bearing angle measurements that define the direction of said target in relation to said interceptor missile;

• a plurality of status estimators Ei, each of which is configured for operating using a propagation function gi that corresponds to a particular hypothesis on the dynamics of said target, for receiving said deviation measurements and for providing, in a sequential manner, an estimate Xi of the status of said target in accordance with the relationship

$$\dot{X}_i = dXi/dt = g_i(Xi);$$

claim 7.

• calculation means (C1 to Cn) capable of calculating, for each status estimator Ei and in each step k of the sequential operation thereof, a relevance index, which is the probability $p_{ik}$ of the difference between the reconstructed angle of elevation and bearing angle measurements received from said reconstruction system (Ref) and the corresponding angles of the predicted estimate $X_i$, and of calculating, for each status estimator Ei, the cumulative product $P_i = \pi_k p_{ik}$ of the probabilities $p_{ik}$ from the first moment to the current time;
• selection means ($S_e$) configured for taking the plurality of different cumulative probability products $P_i$ into account in order to create at least one final estimate $X_F$ of the status of said target from said estimates $X_i$;
• means configured for determining the shortest distance for the interceptor missile to approach the target, the time remaining until this shortest approach distance, and the vector between the interceptor missile and the target at the time of said shortest approach distance; and
• means (G) configured for creating a guidance command for said interceptor missile, **characterised in that** said means for determining the shortest distance for the interceptor missile to approach the target, the time tgo remaining until this shortest approach distance and the vector $\overrightarrow{EBF}$ between the interceptor missile and the target at the time of said shortest approach distance are formed by numerical integration means (IN) configured for numerically integrating said final estimate $X_F$ with the information on the dynamics of said interceptor missile by using the same propagation function(s) $g_F$ as that/those used by the status estimator(s) Ei corresponding to said estimates Xi from which said final estimate $X_F$ is formed.

7. Guidance system according to claim 6, **characterised in that** said guidance command is in the following form:

$$\overrightarrow{\Gamma(t)} = \frac{N(tgo)}{tgo^2} \overrightarrow{EBF}$$

in which $\overrightarrow{\Gamma(t)}$ is the acceleration to be communicated to the interceptor missile as a function of time t and N(tgo) is a gain limit that may vary as a function of tgo.

8. Interceptor missile, **characterised in that** it comprises a guidance system set out in either claim 6 or

**EP 2 955 472 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004155142 A1
- US 7394047 B1
- US 6006145 A
- WO 2013111138 A

**Littérature non-brevet citée dans la description**

- **DE DANY DIONNE ; HANNAH MICHAÏSKA ; JOSEPH SHINAR ; YAAKOV OSHMAN.** Decision Directed Adaptive Estimation and Guidance for an Interception Endgame. *Journal of Guidance, Control and Dynamics,* Juillet 2006, vol. 29 (4
- **DE YAAKOV OSHMAN ; JOSEPH SHINAR ; S. AVRASHI WEIZMAN.** Using a multiple-model adaptive estimator in a random evasion missile/aircraft encounter. *Journal of Guidance, Control and Dynamics,* Novembre 2001, vol. 24 (6